(19) **Europäisches Patentamt**
**European Patent Office**
**Office européen des brevets**

(11) **EP 2 134 791 B1**

(12) **EUROPEAN PATENT SPECIFICATION**

(45) Date of publication and mention
of the grant of the patent:
**10.11.2010 Bulletin 2010/45**

(51) Int Cl.:
***C08L 95/00*** *(2006.01)*

(21) Application number: **08719253.0**

(86) International application number:
**PCT/IB2008/000544**

(22) Date of filing: **10.03.2008**

(87) International publication number:
**WO 2008/120053 (09.10.2008 Gazette 2008/41)**

(54) **Use of textile reinforcing fibres deriving from rubber waste recycling for the production of bituminous plates**

Verwendung von textilen Armierungsfasern aus der Rezyklierung von Gummiabfällen zur Herstellung bituminöser Platten

Utilisation de fibres de renforcement de textile issues du recyclage de déchets de caoutchouc pour la production de plaques bitumineuses

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **13.03.2007 HU 0700220**

(43) Date of publication of application:
**23.12.2009 Bulletin 2009/52**

(73) Proprietor: **Villas Austria Gmbh**
**9586 Fürnitz (AT)**

(72) Inventors:
• **EIZINGER, Horst**
**A-9500 Villach (AT)**

• **SCHNEGG, Elmar**
**A-9545 Radenthein (AT)**

(74) Representative: **von Füner, Nicolai**
**Von Füner Ebbinghaus Finck Hano**
**Patentanwälte**
**Mariahilfplatz 3**
**81541 München (DE)**

(56) References cited:
**EP-A1- 0 483 995      WO-A1-97/49555**
**WO-A1-2007/011249      WO-A2-02/02889**
**WO-A2-2004/089610**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to the use of textile reinforcing fibres deriving from rubber waste recycling for the production of bituminous compound in the course of manufacturing elastomer-modified bituminous membranes.

It is known that bituminous insulating plates are manufactured by applying an oxidised bituminous compound of a certain layer-thickness onto the reinforcement material carrier - which may be glass-fibre or synthetic fibre textile - using dip-coating technology. The mechanical characteristics of the products are mainly determined by the quality of the carrying material, while their water-resisting and long time durability characteristics are determined by the quality of the compound applied.

In order to improve the thermal and waterproofing characteristics of the bituminous compound, synthetic materials are added to it. With the use of rubber-like elastomers the cold-crack of the plates and the characteristic critical temperature value can be reduced and the flexibility of the plate layer can be increased. These elastomers are soluble in the bitumen as colloid materials, they reduce the cold-crack temperature of the bituminous compound and improve the flexible behaviour of the compound. With the use of the other group of additives, plastomers (such as ethylenepropylene polymers) the heat-resistance of the product can be increased up to 140-150 °C.
Among elastomeric additives SBS (styrene butadiene *styrene*) copolymers are worth emphasising. The majority of elastomer-modified bituminous plates remain flexible and pliable even at -20-25 °C, their standard heat-resistance is 110-120 °C.

In the case of modifying bitumen with elastomers, such as SBS, as known, there is a critical value from the aspect of the realisation of the technology, which is the so-called "transition concentration" This concentration means the minimum amount of modifier-polymer to be solved in the bitumen, in the case of which the elastomer assumes the role of the bitumen matrix. It happens because elastomers, due to their amorphous, loose molecular structure containing numerous double bonds, swell up and multiply their volume in the liquid, oily (so-called "malthene") phase of the bitumen, and the swollen polymer created in this way, as a continuous phase determines the composite characteristics of the whole bitumen-elastomer above the transition concentration, making it "rubbery".

Bitumen itself is also a colloidal system, a product of petroleum-refining, and even after the technical steps of this process it retains significant colloidal stability, that is the disperse phase (the so-called asphalthene) and the liquid dispersion medium do not separate to components. The diversity of these components and phases have been proved by research, and despite the sometimes drastic refining technological intervention the system is stable, its structure is determined by its original geochemical history. Today the aim is to maximise the so-called "white-goods" output of crude oil, and because of this problems in connection with the colloidal stability of bitumen frequently occur.

In the case of polymer modification, such as adding SBS, further components are added to bitumen, as a result of which apart from possible *inherent* destabilisation deriving from refining, further stability problems may occur. Depending on the quality of the bitumen the above "transition concentration" may differ in the case of different types of bitumen, but the disperse system before the transition is rather unstable, so for example it is unsuitable for the production of waterproofing membranes. In the case of modification with SBS, the transition concentration may be low as compared to other polymers (in a given case 4-6%), but the swollen polymer matrix created in this way is still rather soft directly after the transition, the ring-and-ball softening-point is too low, and the characteristics of the plate made from it are rather weak. Beside the increasing of the mechanical strength, cold-resistance also improves rapidly as the amount of the modifying agent is increased in the case of concentrations above the transition point, and it reaches its optimal value, when the polymer-malthene matrix, that is the swollen SBS, has reached its cold-resistance, flexibility and structural ability or "potential". At this point a typical order is achieved. In the effect that can be achieved in principle due to the material characteristics of the modifying agent, in a concrete case the structure creating proportion actually realised in the product depends on the chemical structure of the given SBS product, and it also depends on the bitumen to a great extent. In a given case, manufacturers of bituminous plates can and need to compensate for the low quality of the bitumen up to a certain limit by increasing SBS concentration, but it makes the polymer less efficient, because the "potential" resulting from its molecular structure cannot be utilised with appropriate industrial efficiency in such cases of "overdose". Furthermore it also requires significantly greater financial investment from the producers due to the higher basic material costs caused by the extra amount of elastomer modifier.

Consequently, although the low quality of bitumen can be counterbalanced by an increased amount of additives, because of economic considerations it would be more favourable to do the opposite, that is to reduce the added amount of SBS. In plate production, beside an SBS amount set to 10-12 unfilled mass % on average calculated with respect to the bituminous compound according to the state-of-the-art, the total expected technical effect is not generally achieved, as the optimal SBS structure is not created, that is the so-called "material potential", which is due to the molecular structure of the modifying product, is only partly achieved in the characteristics of the bituminous compound in industrial practice.

In addition to or instead of SBS experiments are carried out with further different additives for modifying bitumen. Some of these are realised basically by utilising waste, as in this case there is a relatively low prime cost and an environmental protection profit is also achieved, as waste elimination requires costs. For example, from the fractions created in the course of used rubber tyres, ground rubber has been suggested as an additive, as it is undoubtedly suitable for the partial compensation of the softening-point reduction resulting from the deterioration of the quality of bitumen.

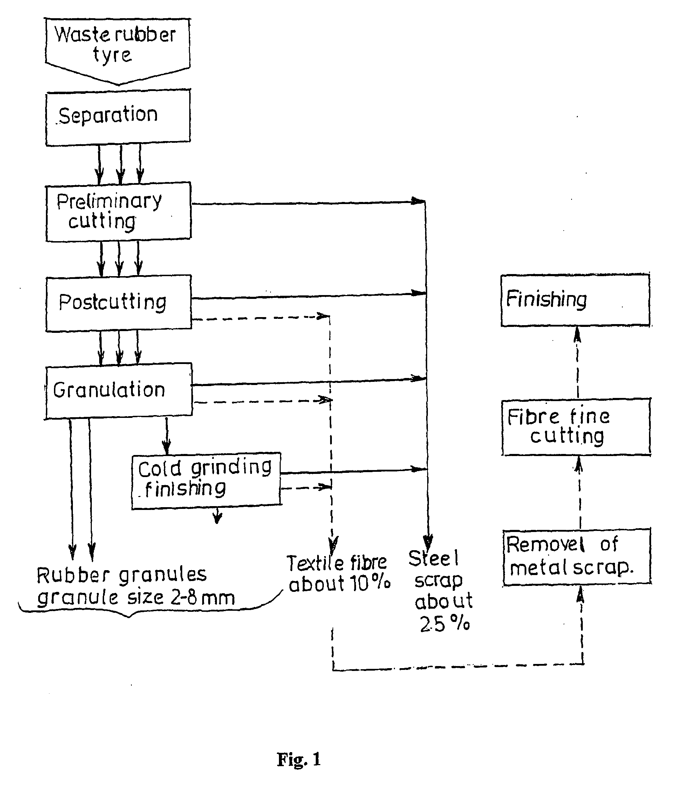

Generally speaking all recycling, rubber tyre processing technologies consist of three steps: preliminary cutting, granulation and cold (cryogenic) grinding. These are accompanied by different screening and assorting processes. In the course of preliminary cutting, after separating the different types of tyres (car, lorry, other), the rubber object is cut up into palm-sized pieces using rotary shears. The process of granulation consists of several stages. In the course of this the preliminarily cut up material is cut into gradually smaller pieces in serial crushing mills. This is called crushing at ambient temperature. During the following screening and assorting processes three fractions are created: rubber granules, steel scrap and fibres. The latter fraction is put into a separator, where the residual metal is removed and further pulverisation and fibre-cutting is performed. During cold-grinding the rubber granules are cooled with liquid nitrogen, and this glass-like solid material is pulverised in a special mill. The flow-chart of waste rubber recycling technology is shown in figure 1. The fibre fraction is not completely separated from the other components, especially from the rubber. The rubber proportion remaining in this fraction is at least 10 mass %, but in certain cases it may be as much as 50-55 mass %.

Results in cement technology and energetic use (burning) have been achieved in respect of the use of the reclaimed reinforcing fibre fraction, which is created in the form of a fibrous mass. One of these results is the method suggested in specification No. WO 2004/089610, in which the mechanical processing of waste rubber tyres and the separation of the individual components is described as above. At the same time the aim set in it is to recycle the fibrous fraction. The main field of recycling involves mixing the fibrous material to bitumen-based building materials and preventing by this the modification of bitumen with polymer, and stabilising viscosity. In certain cases, for this purpose the fibrous fraction is mixed with an organic binding material and added to asphalt, vibration absorber plates instead of polymer, in the form of a liquid concentrate.

In the case of bituminous mass used for waterproofing membranes the situation is different than in the case of bituminous mass used for road construction, the essential difference is that asphalt contains 4-6 mass % of bituminous binding material, while in the case of waterproofing membranes the unfilled bituminous mass contains about 90 mass % of bitumen, so it forms a structural material by itself. The requirements prescribed with respect to bitumen as a structural material are specific, and without taking them into consideration the expectable results do not satisfy the technical level.

The task of the invention is to use separated textile reinforcing fibres deriving from rubber waste recycling for supplementing bituminous mass for waterproofing membranes, where the specific characteristics of the fibrous fraction can be exploited completely.

The invention is based on the use of 1-15 mass % of a fibrous fraction deriving from the recycling of rubber tyre components having a fibre length of 0,2-5 mm and a volume weight of 150-200 g/l calculated with respect to the bituminous mass modified with SBS or SBR copolymer to be applied onto the carrier in the course of manufacturing waterproofing membranes which obtain improved quality. The elastomer-modified bituminous mass is modified with styrene butadiene styrene (SBS) or styrene butadiene rubber (SBR) copolymer. The favourable amount of fibrous fraction used is 2-10 mass % calculated with respect to the bituminous mass modified with SBS copolymer. The fibrous fraction is a fibrous mass containing ground rubber reclaimed and separated in the course of rubber waste recycling, which fibrous mass is typically a mixture of cellulose, polyethylene terephthalate (PET), polyamide (PA 66) and different polyacrylates.

The fibre length of the fibrous fraction used is 0.2-5 mm, favourably 0.4-0.8 mm, its volume weight is 150-200 g/l. The fibrous fraction used contains 5-70 % of rubber particles calculated with respect to its weight, as the rubber section and the fibrous material cannot be separated from each other completely.

The bituminous mass is modified with elastomer, especially SBS polymer, which contains 1-15 % of fibrous fraction calculated with respect to its weight, deriving from and separated in the course of rubber waste recycling, containing rubber particles. The bituminous mass is suitable for manufacturing bituminous plates when applied onto a carrier.

In the course of our research we were surprised to find that the utilisation of rubber waste involves further possibilities in the case of bitumen modified with SBS and other elastomers, despite the fact that the addition of ordinary fibrous material itself is not efficient in plate manufacturing. The fibrous fraction gained from separated rubber inevitably contains rubber particles too, and with this complex mixture apart from counterbalancing thermal parameter deterioration deriving from the deterioration of the quality of bitumen, the same aim can also be reached with significantly reduced elastomer addition.

We found that these fibres, due to their special surface modification occurring in the course of tyre production, as "elastomer-friendly" fibrous materials, facilitate the structuring of swollen SBS in bitumen, because they can be integrated in the swollen SBS matrix in malthene enhancing its intensive structuring and cross-linking, that is the more intensive exertion of its possible effect resulting from its molecular structure. At the same time the rubber particles also take part in this complex composite system created, as in bitumen SBS creates a secondary structure in the course of swelling (which significantly widens the so-called "plasticity range", that is the temperature interval of cold-crack temperature and softening point), and the fibrous material activated with rubber on its surface and also the rubber dust accompanying it is integrated in this structure. Experience shows that in cases when any unfavourably characteristic of the medium (bitumen) and/or the contaminating additive having an unfavourable effect on the elastomer structure inhibit the creation of the secondary cross-linked structure, SBS is not able to exert its complete theoretical structural effect deriving from its molecular structure, while the additive according to the invention - the fibrous fraction - and SBS together, that is the modified SBS matrix is more stable than SBS on its own. In this field the fibrous material and rubber have a synergistic effect. In the course of the recycling procedure, the fibrous fraction regarded as invaluable on its own has the unexpected characteristic feature that it enhances the cross-linking of SBS dissolved in bitumen, strengthens its secondary structure, widening by this the plastic range. As a result of this the upper temperature limit (ring-and-ball softening-point) is pushed further up, while the cold-bending temperature limit is pushed further down. The rubber particles increase the compactness of the SBS system, while the fibrous material increases its structuring. The fact that there is a specific interaction on two sides is supported by the experience that the above effect does not appear when other bitumen modifying agents are used, and the ordinary fibrous material, or even rubber granulate on its own, does not exert the above effect on the bituminous SBS mass.

Beside the above interactions the fibrous material is also integrated in the bitumen itself, so it also has a structure strengthening effect, but its real significance extending beyond this known effect is asserted through its effect exerted on SBS.

Consequently in the course of our material research we came to the conclusion that widely used fibrous materials, such as cellulose, acrylic fibre, polyethylene terephthalate, polyamide, when heated with raw or vulcanised rubber, go through surface modification, which is favourable from the aspect of the above aim and enables the use of the invention.

We found that this as a result of this the fibrous mass can be used as an additive of full value in SBS bitumen systems, and with its help the complex effect described above can be generated, which means that even with a reduced amount of SBS or using bitumen of a lower quality elastomer-modified waterproofing sheets of full or even improved quality can be manufactured.

It is important to emphasise that the recognition on which the invention is based relates expressly to the surface modification of fibres occurring in the course of vulcanisation, so the positive effect appears in each case independently from the interval within which the fibre composition of the reinforcing textile layers used in rubber production changes. During the examination of the fine structure of the mass it was found that the waste fibrous fraction has inherent surface characteristics as a result of which intensive interaction is generated with SBS in bitumen, and in the mass the fibres occur in random distribution and isolated, they do not form bundles or agglomerates, as the above interaction is stronger than the tendency of the fibres to form bonds, which causes technological difficulties in other cases.

At the same time, beside the technical progress achieved in the product, the significant interaction between SBS dissolved in bitumen and the fibrous fraction additive according to the invention can also be demonstrated with direct viscosity - rheological measurements. For this purpose we prepared a basic mass by adding 5% SBS to B-200 bitumen, then we added to it 2.4 and 6% fibrous fraction deriving from rubber recycling with a rubber content of 35% partly intensively stuck to the fibres and partly as remnant dust. It is known that molten, so-called distilled bitumen, which is the most widely used in bituminous plate manufacturing, behaves as an ideal liquid on its own and follows Newton's law, according to which

$$\eta = \frac{\gamma}{\sigma}$$

where $\eta$ is the so-called viscosity, $\gamma$ is the shear stress (that is the effect inducing the deformation or flow or the liquid) and $\sigma$ is the shear rate, that is the phenomenon of flow itself. However, this law does not stand for liquids having a structure (for deforming bodies), in such cases more complicated kinematic descriptions must be applied, such as the Ostwald formula:

$$\sigma = K\gamma^{n}$$

The above definitions stand for the amounts in this formula, viscosity is replaced by K, a new coefficient called the factor of consistency, and exponent n is the flow index, the value of which is 1, if the material is "Newtonian". In practical cases n is between 1 and 0.5, so a difference of 0.1 has a considerable structural significance. Obviously no modified bitumen can be a "Newtonian" liquid, and the extent of the difference significantly depends on concentration and the structure of SBS - in the case of the given bitumen. The results of our measurements are shown in table 1 and on curve 1.

As it can be seen, beside the significant increase of K, the presence of SBS also appears in the decrease of n. However, it is interesting that even in the case of adding 2% fibrous material a significant decrease occurs in the subsequent flow index, and consistency continues to increase. There are two conspicuous factors. One of them is that the mathematical form of the flow state occurring in the case of 2% addition does not continue to change in the case of any further addition, and the other one is that the value of K does not at all increase linearly in relation to addition (increase of concentration), but exponentially. Both factors indicate the creation of the SBS fibrous material - bitumen complex.

| Sample | Consistency [Pa.s] | Flow index |
|---|---|---|
| SBS 5% (90 °C) | 25.48 | 0.8 |
| SBS 5% (95 °C) | 20.194 | 0.8 |
| SBS 5% (100 °C) | 14.039 | 0.8 |
| SBS 5% (105 °C) | 8.4 | 0.8 |
| | | |
| SBS 5% Sz 2% (90 °C) | 110.853 | 0.62 |
| SBS 5% Sz 2% (95 °C) | 93.825 | 0.62 |
| SBS 5% Sz 2% (100 °C) | 69.307 | 0.62 |
| SBS 5% Sz 2% (105 °C) | 49.7 | 0.62 |
| | | |
| SBS 5% Sz 4% (95 °C) | 235.1 | 0.62 |
| SBS 5% Sz 4% (100 °C) | 148.19 | 0.62 |
| SBS 5% Sz 4% (105 °C) | 97.642 | 0.67 |
| SBS 5% Sz 4% (110 °C) | 60.23 | 0.71 |
| | | |
| SBS 5% Sz 6% (100 °C) | 316.52 | 0.52 |
| SBS 5% Sz 6% (105 °C) | 207.186 | 0.57 |
| SBS 5% Sz 6% (110 °C) | 133.17 | 0.63 |

| Fibrous material Concentration [%] (with 5% SBS) | Consistency (Pa.s) | | | | |
|---|---|---|---|---|---|
| | 90 °C | 95 °C | 100 °C | 105 °C | 110 °C |
| 0 | 25.48 | 20.194 | 14.039 | 8.4 | -- |
| 2 | 110.853 | 93.825 | 69.307 | 49.7 | -- |
| 4 | -- | 235.1 | 148.19 | 97.642 | 60.23 |
| 6 | -- | -- | 316.52 | 207.186 | 133.17 |

Due to the use of the invention unfavourable effects deriving from the deterioration of the quality of bitumen and appearing in the narrowing of the plasticity range (the decreasing of the softening point and the increasing of the cold-crack temperature) are eliminated, and at the same time it becomes possible to reduce the amount of SBS used in the course of bituminous membrane manufacturing, which results in an economic advantage. Obviously the other improved technical characteristics of the waterproofing sheets are also important. Two of these are worth emphasising. One of them is the so-called "availability to foot traffic in the case of using bituminous plates, which is rather critical in the case of SBS plates. It means that under exposure to radiant heat (sunshine) and a relatively high ambient temperature the possibility of walking on the already fitted sheet is maintained without any damage occurring in the sheet. The other improved characteristic feature appears on the surface after gas welding, as the surface rigidity of the bituminous membrane improves, which means that during use the welded bituminous plate is more resistant to environmental damage.

Below the invention is described in connection with examples.

Below different versions of the use of fibrous fraction is described. With respect to the fact that we intend to describe the essence of the invention, the fibrous material integration and its different versions in connection with the examples, we deliberately did not change the length of the fibres, as it does not influence the essence of the invention, but it has an effect on the results. For this reason, in the interest of easy comparison we eliminated this factor, and in each case we used a mass of fibres with a length of $0.5 \pm 0.2$ mm.

We analysed a fibrous fraction produced in the course of the mixed processing of rubber tyres of different origin.

Due to the assorting of the tyres at random, its composition was the following:

50% cellulose
30% PET
20% PA (6.6)

Due to the processing technology the given sample also contained rubber particles of different sizes and types of 15 mass % calculated with respect to its material.

From the above material mass and SBS we produced elastomer-modified bituminous plate, and compared it with the effect of fibrous material and rubber dust addition. The results of our experiments are summarised in the table below:

| Components | 1 | 2 | 3 | 4 | 5 | 6 | 7 |
|---|---|---|---|---|---|---|---|
| B-200 Bitumen % | 86 | 84 | 86 | 86 | 86 | 86 | 86 |
| Europrene 161 (BG.(SBS)% | 8 | - | 8 | 8 | 8 | 8 | 8 |
| Recycled fibrous fraction | - | - | - | - | - | - | 4 |
| Mixture of original fibres % | | - | - | 4 | - | 2 | - |
| Rubber dust | - | 11 | 4 | - | - | - | - |

Results received

| | 1 | 2 | 3 | 4 | 5 | 6 | 7 |
|---|---|---|---|---|---|---|---|
| Softening point °C | 105 | 64 | 114.5 | 123.5 | 108.5 | 117 | 125 |
| Penetration 256 °C | 59 | 56 | 45 | 37 | 42 | 43 | 49 |
| Penetration 50 °C | 110 | - | 105 | 88 | 96 | 98 | - |
| Cold-crack °C | -15 | +8 | -15 | -15 | -18 | -15 | -22 |

It can be seen that the considerable extra effect can be reached with fibres gained from the recycling of surface-modified, used rubber objects, and this effect is not produced either by similar synthetic fibres not treated with rubber or ground rubber on its own.

**Claims**

1. The use of 1-15 mass % of a fibrous fraction deriving from the recycling of rubber tyre components having a fibre length of 0,2-5 mm and a volume weight of 150-200 g/l calculated with respect to the bituminous mass modified with SBS or SBR copolymer to be applied onto the carrier in the course of manufacturing waterproofing membranes which obtain improved quality.

**2.** Use as in Claim 1, **characterised by** that the fibrous fraction is a fibrous mass containing 5-70 % ground rubber reclaimed and separated in the course of rubbers waste recycling, which fibrous mass is typically a mixture of cellulose, polyethylene terephthalate (PET), polyacrylate and polyamide (PA 66).

**Patentansprüche**

**1.** Verwendung von 1 - 15 Mass.-% einer faserförmigen Fraktion, erhalten durch Recycling von Kautschukreifenkomponenten mit einer Faserlänge von 0,2 - 5 mm und einem Volumengewicht von 150 - 200 g/l, bezogen auf die mit SBS- oder SBR-Copolymer modifizierte bituminöse Masse die auf den Träger im Verlaufe der Herstellung von wasserdichten Membranen aufgebracht wird, wodurch diese eine höhere Qualität erlangen.

**2.** Verwendung gemäß Anspruch 1, **dadurch gekennzeichnet, daß** die faserförmige Fraktion eine Fasermasse ist, die 5 - 70 % des regenerierten und im Verlaufe des Kautschukabfallrecyclings vermahlenen Kautschuks enthält, wobei diese Fasermasse gewöhnlich ein Gemisch aus Celulose, Polyethylenterephthalat (PET), Polyacrylat und Polyamid (PA 66) darstellt.

**Revendications**

**1.** Utilisation d'une fraction fibreuse à concurrence de 1 à 15 % en masse, qui dérive du recyclage de composants de pneus en caoutchouc, possédant une longueur de fibre de 0,2 à 5 mm et un poids volumique de 150 à 200 g/l calculé par rapport à la masse bitumineuse modifiée avec un copolymère SBS ou SBR à appliquer sur le support au cours de la fabrication de membranes d'imperméabilisation qui sont ainsi dotées d'une qualité améliorée.

**2.** Utilisation selon la revendication 1, **caractérisée par le fait que** la fraction fibreuse représente une masse fibreuse contenant du caoutchouc broyé à concurrence de 5 à 70 %, régénéré et séparé au cours du recyclage de déchets de caoutchouc, ladite masse fibreuse représentant de manière spécifique un mélange de cellulose, de polyéthylène téréphtalate (PET), de polyacrylate et de polyamide (PA 66).

**Fig. 1**

## Consistency, fibrous material effect

Legend:
- SBS 5%
- SBS 5%Sz 2%
- SBS 5% Sz 4%
- SBS 5% Sz 6%

(X-axis: Temperature (°C); Y-axis: Consistency (Pa.s))

## Fibrous material concentration — Consistency dependence

Legend:
- 90 °C
- 95 °C
- 100 °C
- 105 °C
- 110 °C

(X-axis: Fibrous material concentration (%); Y-axis: Consistency (Pa.s))

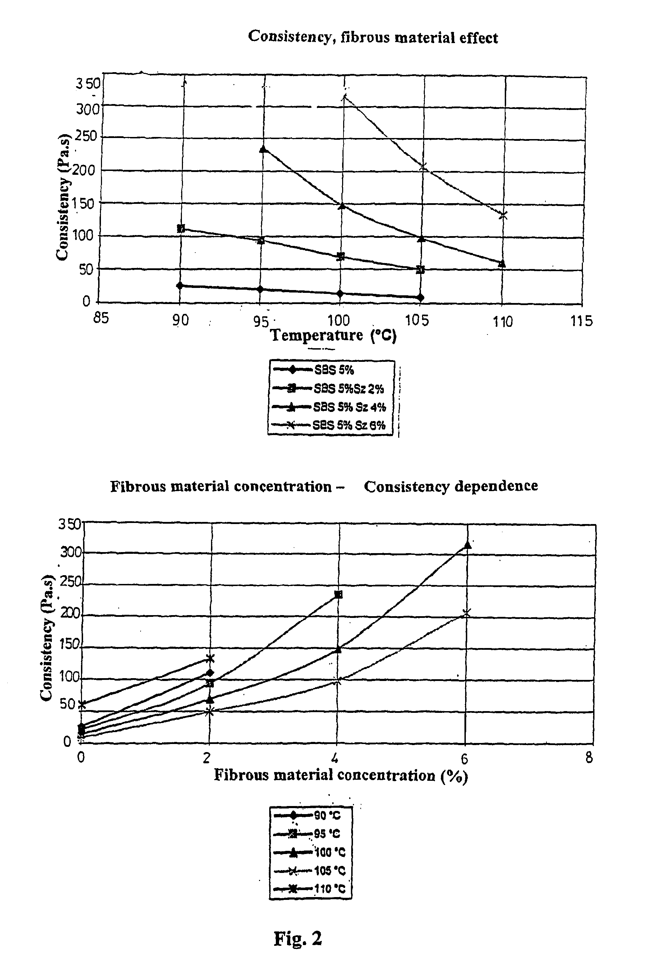

**Fig. 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004089610 A